# EUROPEAN PATENT APPLICATION

(11) **EP 4 730 617 A1**
(43) Date of publication of application: **22.04.2026**
(21) Application number: 25207624.5
(22) Date of filing: 09.10.2025
(51) Int. Cl.: H02K 3/02, H02K 3/51, H02K 3/52, H02K 9/19, H02K 11/042, H02K 13/00, H02K 13/02

(54) **MOTOR**

(30) Priority: 16.10.2024 JP 2024180627; 01.08.2025 JP 2025129579
(71) Applicant: AISIN CORPORATION, Aichi 448-8650 (JP)
(72) Inventor: KITAO, Takuya, Kariya, 448-8650 (JP)
(74) Representative: Kramer Barske Schmidtchen Patentanwälte PartG mbB

(57) **Abstract**

A motor (10) according to this disclosure includes a stator (20) and a wound-field rotor (30). The rotor (30) includes a rotor core (32), a rotor coil (33), a terminal electrode (35), and a rotor shaft (31). The rotor coil (33) is made of aluminum and wound around the rotor core (32). The terminal electrode (35) is made of aluminum and provided at an end portion (33A) of the rotor coil (33). The rotor shaft (31) is attached to the rotor core (32), and rotates together with the rotor core (32). The terminal electrode (35) made of aluminum is attached to the rotor shaft (31), and is configured to receive electric power from an electrode connected to an external electric power source.

## Description

### TECHNICAL FIELD

This disclosure generally relates to a wound-field motor.

### BACKGROUND DISCUSSION

JP2013-38862A (Reference 1) discloses a rotor for a rotating electric machine (what is called a motor) including windings in the rotor. The rotor includes a cylindrical rotor core and the windings wound in the rotor core. The rotor core includes winding slots, magnetic pole tooth portions, and winding holding portions. A plurality of the winding slots are formed at a peripheral portion of the rotor core. The magnetic pole tooth portions are formed by the winding slots in such a way as to be at equal intervals along the circumferential direction. The winding holding portions are located outside the winding slots and integrated with the magnetic pole tooth portions, and hold the windings in the winding slots from an outside. The winding holding portions are each continuous between the adjacent magnetic pole tooth portions. The windings are each formed by two or more turns around the magnetic pole tooth portion.

The windings (hereinafter, also referred to as a rotor coil) are constituted of a conductive wire. This wire is considered to be a copper or aluminum wire coated with insulation such as enamel.

Incidentally, in terms of establishing external electrical connection, it is desirable that terminal electrodes suitable for the connection are provided at end portions of the rotor coil.

However, when the rotor coil is made of aluminum and the terminal electrodes are made of copper for example, a connection portion between the copper terminal electrodes and the aluminum rotor coil becomes aluminum-to-copper connection prone to cause a problem of corrosion (galvanic corrosion). When the rotor coil is made of copper and the terminal electrodes are made of copper, corrosion does not occur at a connection portion between the copper terminal electrodes and the copper rotor coil. However, in this case, copper being heavier than aluminum results in a heavier motor, and further, the motor is more expensive and less recyclable. Because of the larger weight, centrifugal force generated when the motor rotates is greater, and for the same strength, the number of revolutions cannot be made larger than that in the case of the aluminum rotor coil.

For example, there is a case as one example in which a rotor in a high-power motor or the like is cooled with oil or the like. However, in this case, when being affected by moisture or other substances contained in the oil, the corrosion is expected to become even more severe.

A need thus exists for a motor that suppresses corrosion occurring at a connection portion between a terminal electrode and an aluminum rotor coil.

### SUMMARY

A motor according to this disclosure includes a stator and a wound-field rotor. The rotor includes a rotor core, a rotor coil, a terminal electrode, and a rotor shaft. The rotor coil is made of aluminum and wound around the rotor core. The terminal electrode is made of aluminum and provided at an end portion of the rotor coil. The rotor shaft is attached to the rotor core, and rotates together with the rotor core. The terminal electrode made of aluminum is attached to the rotor shaft, and is configured to receive electric power from an electrode connected to an external electric power source.

This disclosure provides the motor that suppresses corrosion occurring at a connection portion between the terminal electrode and the aluminum rotor coil. Aluminum being lighter than copper results in weight reduction and cost reduction, and recyclability is improved. Further, the weight reduction can decrease centrifugal force at a time of rotation of the motor, and can increase the number of revolutions even when the strength is unchanged.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a perspective view illustrating a rotor in a first embodiment according to this disclosure;
FIG. 2 is a partial sectional view of a motor taken along a rotor shaft in the first embodiment according to this disclosure;
FIG. 3 is a sectional view illustrating a resin molded portion in a second embodiment according to this disclosure;
FIG. 4 is a sectional view illustrating a resin molded portion in a third embodiment according to this disclosure;
FIG. 5 is a sectional view illustrating a resin molded portion in a fourth embodiment according to this disclosure; and
FIG. 6 is a partial sectional view of a motor taken along a rotor shaft in a fifth embodiment according to this disclosure.

### DETAILED DESCRIPTION

Modes for implementing this disclosure (hereinafter, referred to as "embodiments") are described below in detail with reference to the accompanying drawings.

The same elements are designated by the same reference numerals or signs throughout the description of the embodiments.

Dimensional ratios in the drawings differ from the actual dimensional ratios. The drawings are made merely for facilitating understanding of the description, and does not assure that the same portions are depicted with the same dimensions among the drawings.

Further, in the drawings, in some cases, the reference signs are assigned only to some of a plurality of portions having the same attributes, for the sake of visual clarity.

### <<First Embodiment>>

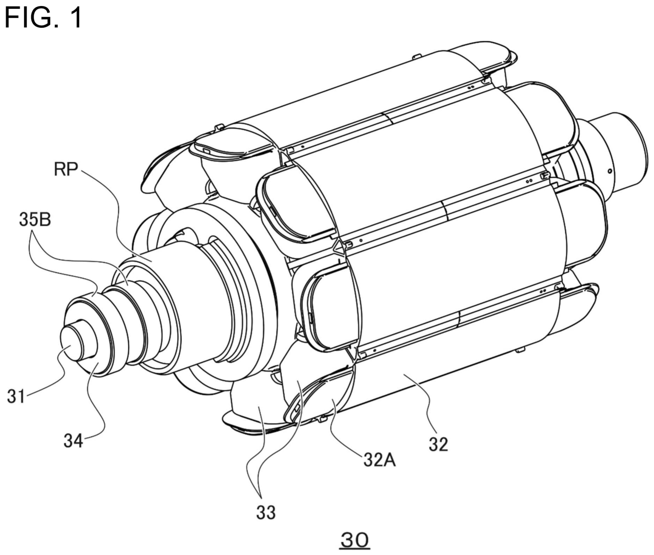

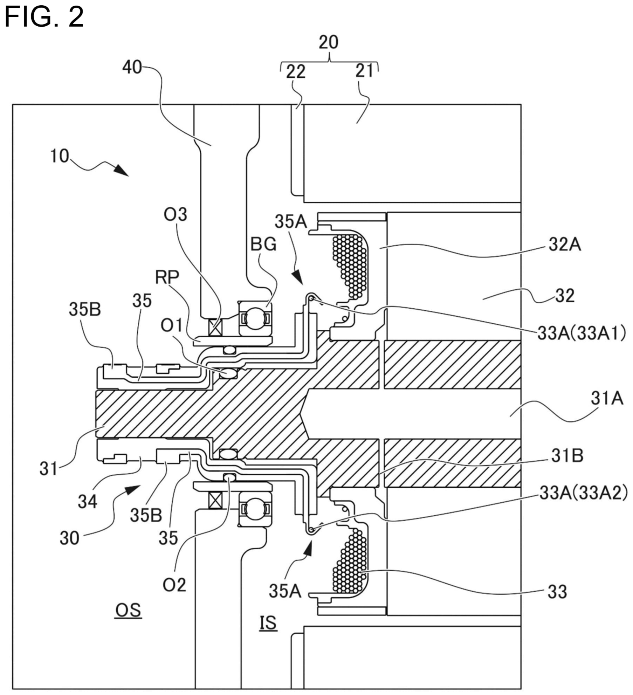

A wound-field motor 10 according to a first embodiment of this disclosure is described below with reference to FIG. 1 and FIG. 2.

FIG. 1 is a perspective view illustrating a rotor 30 in the first embodiment of this disclosure.

FIG. 2 is a partial sectional view of the motor 10 taken along a rotor shaft 31 in the first embodiment of this disclosure, and illustrates a part of the motor 10 associated with a periphery of an end portion of the rotor 30 on the left side in FIG. 1.

As illustrated in FIG. 2, the motor 10 according to the first embodiment includes a stator 20, a rotor 30 provided on a radial inner side of the stator 20, and a casing 40 accommodating the stator 20 and the rotor 30. Note that the rotor 30 may be an outer rotor provided on a radial outer side of the stator 20.

A refrigerant (e.g., oil such as ATF) for cooling the stator 20 and the rotor 30 is supplied to a space IS inside the casing 40. Thus, the space IS is a wet space.

A space OS outside the casing 40 is a dry space.

The stator 20 includes a stator core 21 and a stator coil 22 wound around the stator core 21.

As illustrated in FIG. 1, the rotor 30 includes a rotor shaft 31, a rotor core 32 provided on the rotor shaft 31, and a rotor coil 33 made of aluminum and wound around the rotor core 32.

In the first embodiment, the rotor core 32 includes an insulator 32A, and the rotor coil 33 is provided on the insulator 32A.

As illustrated in FIG. 2, the rotor shaft 31 includes a hollow axial refrigerant passage 31A and a radial refrigerant passage 31B. The hollow axial refrigerant passage 31A is formed inside the rotor shaft 31. The radial refrigerant passage 31B is located on an end portion side in the axial refrigerant passage 31A and penetrates in the radial direction for discharging a refrigerant on an end portion side of the rotor coil 33.

When the rotor 30 rotates, the centrifugal force is generated by the rotation. By this force, the refrigerant (e.g., oil such as ATF) that has been supplied into the axial refrigerant passage 31A is discharged to an end portion side of the rotor coil 33 through the radial refrigerant passage 31B.

As illustrated in FIG. 2, the rotor 30 includes a resin molded portion 34, a pair of aluminum terminal electrodes 35, and a ring member RP. The resin molded portion 34 is provided at an end portion on one side or an opposite side (an end portion on the opposite side in FIG. 2) in the rotor shaft 31. The terminal electrodes 35 made of aluminum are enclosed by the resin molded portion 34. The ring member RP is provided at an outer periphery of the resin molded portion 34.

A seal member O1 (e.g., an O-ring) is provided between an outer surface of the rotor shaft 31 and an inner surface of the resin molded portion 34. A seal member O2 (e.g., an O-ring) is provided between an outer surface of the resin molded portion 34 and an inner surface of the ring member RP.

A rotation seal member O3 (e.g., a rotation oil seal) is provided between an outer surface of the ring member RP and an inner surface of an opening formed in the casing 40 and allowing the rotor shaft 31 to extend to an outside.

A bearing BG is provided at a position inside the casing 40, on an inner side of the seal member O3. The bearing BG rotatably supports the ring member RP.

Accordingly, the refrigerant inside the casing 40 is prevented from leaking to the outside while the rotor 30 is allowed to rotate.

As illustrated in FIG. 2, end portions 35A on the one side (on the right side in FIG. 2) in a pair of the terminal electrodes 35 extend from the resin molded portion 34 into an inner space of the casing 40 that is the wet space.

The end portions 35A on the one side are connected to end portions 33A of the rotor coil 33 provided in the inner space of the casing 40 that is the wet space. Thereby, the terminal electrodes 35 are provided at the end portions 33A of the rotor coil 33.

Specifically, the end 35A on the one side in one of a pair of the terminal electrodes 35 is connected to an end portion 33A1 that is one of the end portions 33A of the rotor coil 33. The end 35A on the one side in the other terminal electrode 35 is connected to an end portion 33A2 that is the other of the end portions 33A of the rotor coil 33.

For the connection, any connection method may be used as long as the method ensures a secure connection that is not released by vibrations or the like at the time of the rotation of the rotor 30.

For example, the secure connection can be made by laser welding, thermal crimping, ultrasonic welding, or friction stir welding.

Meanwhile, ends 35B on the opposite side in a pair of the terminal electrodes 35 are each provided in a ring shape (refer to FIG. 1) along a rotational direction of the rotor 30, on an outer surface of the resin molded portion 34 located outside the casing 40. Thus, in a dry space outside the casing 40, the ends 35B can contact with electrode brushes (not illustrated) for supplying electric power to the rotor 30.

As described above, the terminal electrodes 35 provided at the end portions 33A of the aluminum rotor coil 33 are made of aluminum. In other words, in the motor 10 according to the first embodiment, the rotor 30 includes the aluminum terminal electrodes 35 provided at the end portions 33A of the rotor coil 33.

Since the end portions 33A of the rotor coil 33 are located in the wet space, the connection portions between the aluminum terminal electrodes 35 provided at the end portions 33A of the rotor coil 33 and the end portions 33A of the rotor coil 33 are also located in the wet space. However, the connection portions are made of the same kind of metal, and thus, corrosion (galvanic corrosion) at this connection portion can be suppressed.

The opposite sides (the ends 35B on the opposite side) of a pair of the terminal electrodes 35 are located in the dry space. Thus, even when the ends 35B contact with the electrode brushes made of a metal other than aluminum, the ends 35B are significantly less prone to corrosion (galvanic corrosion) than in the wet space.

### <<Second Embodiment>>

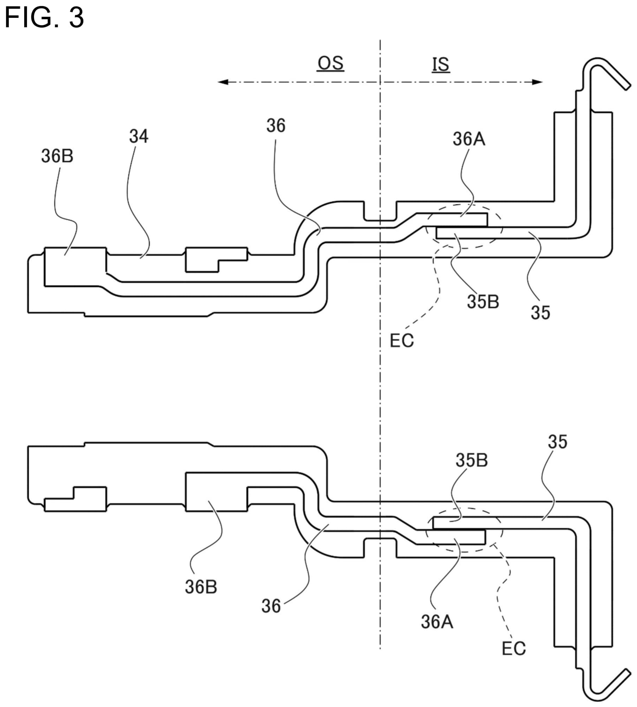

Next, the wound-field motor 10 according to a second embodiment of this disclosure is described with reference to FIG. 3.

In the first embodiment, the ends 35B of a pair of the aluminum terminal electrodes 35 are each provided in the ring shape (refer to FIG. 1) along the rotational direction of the rotor 30, on the outer surface of the resin molded portion 34, and contact with the electrode brushes (not illustrated).

However, aluminum tends to wear out rapidly when rubbed by the electrode brushes (not illustrated). In the second embodiment, a configuration for addressing this wear problem is described.

Since a basic configuration of the motor 10 according to the second embodiment is similar to that of the motor 10 according to the first embodiment, the following mainly describes the matters different from those in the first embodiment, and omits the description of the similar matters in some cases.

FIG. 3 is a sectional view illustrating the resin molded portion 34 in the second embodiment according to this disclosure.

In FIG. 3, the one-dotted chain line indicates a boundary between the space IS that is the wet space inside the casing 40 and the space OS that is the dry space outside the casing 40, and the one-dotted arrows each indicate on which side of the one-dotted line boundary the inner space IS or the outer space OS is located.

As illustrated in FIG. 3, the rotor 30 (not illustrated) in the second embodiment further includes a pair of metal portions 36, electrical contacts EC, and the resin molded portion 34. The metal portions 36 are made of a material different from aluminum. The electrical contacts EC electrically connect the end portions 35B (the left-side end portions in FIG. 3) on the opposite side in the terminal electrodes 35 to ends 36A on the one side in the metal portions 36. The resin molded portion 34 serves as a corrosion prevention portion that prevents corrosion at the electrical contacts EC.

The electrical contact portions EC connecting the end portions 35B on the opposite side (the left side in FIG. 3) in the terminal electrodes 35 to the ends 36A on the one side in the metal portions 36 may be kept in the contact state by only the resin molded portion 34. However, for the stronger connection, the connection may be made by a joining method such as ultrasonic welding or friction stir welding.

The metal portions 36 are each a busbar made of copper and connecting the terminal electrode 35 to the electrode brush (not illustrated) that is located outside the resin molded portion 34 and that is provided for supplying electric power to the rotor 30 (not illustrated). The metal portions 36 each include an end 36B on the opposite side. The end 36B contacts with the electrode brush (not illustrated), and is ring-shaped along the rotational direction of the rotor 30.

Particularly, from a standpoint of resistance against wear caused by friction with the electrode brushes, the metal portions 36 are preferably busbars made of bronze.

The ring-shaped ends 36B on the opposite side in the metal portions 36 are located in the outside of the casing 40 (not illustrated) that is the dry space, similarly to the ends 35B on the opposite side in a pair of the terminal electrodes 35 illustrated in FIG. 1. The ends 36B have the same shapes as those of the ends 35B.

According to the motor 10 (not illustrated) of the second embodiment described above, the rotor 30 includes the metal portions 36 made of a material different from aluminum. The metal portions 36 enable external electrical connection of the rotor 30. For this reason, an appropriate material can be selected for the connection to the external electrode.

The rotor 30 further includes the corrosion prevention portion (in the above-described example, the resin molded portion 34 enclosing the electrical contacts EC) that prevents corrosion at the electrical contacts EC electrically connecting the aluminum terminal electrodes 35 to the one sides of the metal portions 36 made of a material other than aluminum. Thereby, the electrical contacts EC can be prevented from being exposed to the wet condition.

In other words, although the electrical contacts EC are located in the wet space, the corrosion prevention portion (resin molded portion 34) prevents the electrical contacts EC from becoming wet.

Thus, in the second embodiment, although the electrical contacts EC each constitute the connection portion between different kinds of metals are located in the wet space, occurrence of the corrosion (galvanic corrosion) can be significantly suppressed.

In the above-described case, the ends 36B on the opposite side in the metal portion 36 are each ring-shaped, similarly to the first embodiment. However, separate ring-shaped members made of copper may be provided by welding, brazing, or the like in such a way as to be formed as the ends 36B on the opposite side in the metal portion 36.

In this case, the ends 36B are formed as the separate members, and thus, preferably, the metal portions 36 are made of oxygen-free copper or the like having low electrical resistance, and the separate members formed as the ring-shaped ends 36B are made of bronze.

Similarly to the first embodiment, the opposite sides (opposite ends 36B) of the metal portions 36 are located in the dry space. Accordingly, for example, even when the opposite ends 36B contact with the electrode brushes made of a metal different from the material of the metal portion 36, the susceptibility of the opposite ends 36B to corrosion is far lower than the susceptibility to corrosion (galvanic corrosion) in the wet space.

### <<Third Embodiment>>

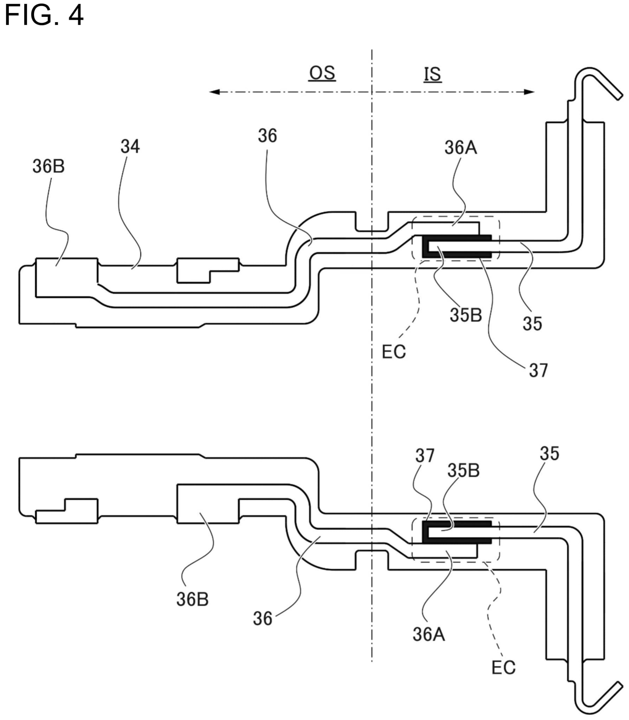

Next, the wound-field motor 10 according to a third embodiment of this disclosure is described with reference to FIG. 4.

Since a basic configuration of the motor 10 according to the third embodiment is similar to that of the motor 10 according to the second embodiment, the following mainly describes the matters different from those in the second embodiment, and omits the description of the similar matters in some cases.

FIG. 4 is a sectional view illustrating the resin molded portion 34 in the third embodiment of this disclosure, and corresponds to FIG. 3.

Similarly to FIG. 3, also in FIG. 4, the one-dotted chain line indicates a boundary between the space IS that is the wet space inside the casing 40 and the space OS that is the dry space outside the casing 40, and the one-dotted arrows each indicate on which side of the one-dotted line boundary the inner space IS or the outer space OS is located.

As illustrated in FIG. 4, the rotor 30 (not illustrated) in the third embodiment further includes, as a corrosion prevention portion, not only the resin molded portion 34 but also plating 37 applied to portions included in the terminal electrodes 35 and associated with the electrical contacts EC.

For example, when the plating 37 is formed of a material such as Sn (tin) or Ni (nickel), corrosion (galvanic corrosion) between the plating 37 and copper and between the plating 37 and aluminum is unlikely to occur. Accordingly, a material of the plating 37 is preferably Sn or Ni.

Thereby, for example, even when peeling or the like occurs at an interface between the terminal electrode 35 and the resin molded portion 34 due to expansion and contraction of the terminal electrode 35 caused by a temperature change at the time of use of the motor 10, and the refrigerant seeps into the electrical contact EC, the provision of the plating 37 resistant to corrosion (galvanic corrosion) as described above can suppresses the corrosion (galvanic corrosion).

Aluminum is prone to surface oxidation, and such oxidation significantly increases the electrical resistance. However, providing the plating 37 as described above can suppress oxidative degradation of a surface included in the terminal electrode 35 and serving as a contact surface between the metal portion 36 and the terminal electrode 35.

### <<Fourth Embodiment>>

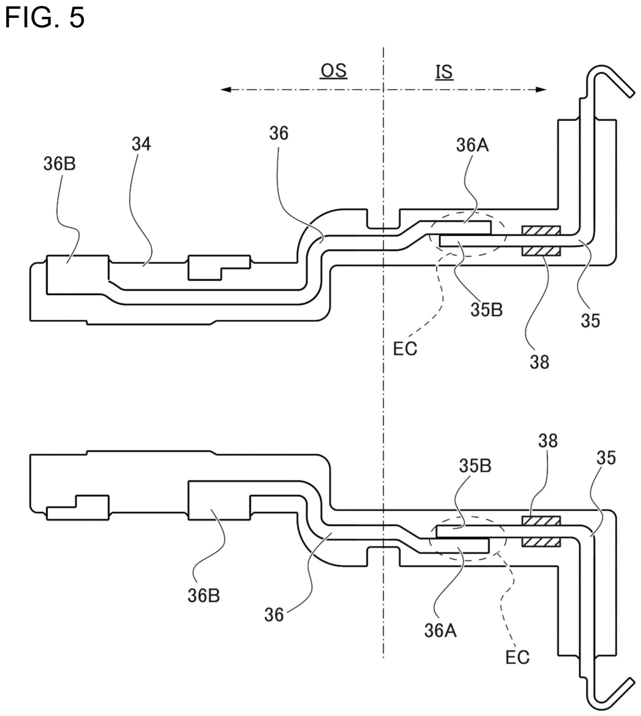

Next, the wound-field motor 10 according to a fourth embodiment of this disclosure is described with reference to FIG. 5.

Since a basic configuration of the motor 10 according to the fourth embodiment is similar to that of the motor 10 according to the second embodiment, the following mainly describes the matters different from those in the second embodiment, and omits the description of the similar matters in some cases.

FIG. 5 is a sectional view illustrating the resin molded portion 34 in the fourth embodiment of this disclosure, and corresponds to FIG. 3.

Similarly to FIG. 3, also in FIG. 5, the one-dotted chain line indicates a boundary between the space IS that is the wet space inside the casing 40 and the space OS that is the dry space outside the casing 40, and the one-dotted arrows each indicate on which side of the one-dotted line boundary the inner space IS or the outer space OS is located.

As illustrated in FIG. 5, the rotor 30 (not illustrated) in the fourth embodiment further includes, as a corrosion prevention portion, not only the resin molded portion 34 but also a pair of oil seal portions 38 located within the resin molded portion 34 and provided on a pair of the terminal electrodes 35. The oil seal portions 38 are on a side of the rotor coil 33 (refer to FIG. 2) with respect to the electrical contacts EC. The oil seal portions 38 are primers, for example.

The primer exhibits high adhesion both to aluminum and to the molded resin of the resin molded portion 34. For this reason, although there is a possibility of occurrence of peeling at the interface between the terminal electrode 35 and the resin molded portion 34 described in the third embodiment, the occurrence of such peeling is suppressed at least in a region of the oil seal portion 38. Thus, the refrigerant is prevented from seeping into the electrical contact EC so that the corrosion (galvanic corrosion) can be suppressed.

The oil seal portions 38 do not need to be limited to the primers, and may be made of any resin-based material that exhibits high adhesion both to aluminum and to the molded resin of the resin molded portion 34.

In the above-described case, the oil seal portions 38 are provided on a side of the rotor coil 33 (refer to FIG. 2) with respect to the electrical contacts EC. However, additional oil seal portions similar to the oil seal portions 38 may be provided on the opposite side (the left side in FIG. 5) of the oil seal portions 38 in such a way that the electrical contacts EC are each sandwiched between the additional oil seal portion and the oil seal portion 38.

In other words, the oil seal portions may be provided on both sides of the electrical contact EC. Thereby, even when peeling or the like occurs at the interface between the metal portion 36 and the resin molded portion 34, oxidative degradation of the surface included in the terminal electrode 35 and serving as the contact surface between the metal portion 36 and terminal electrode 35 can be prevented from occurring due to entering of an outside air into the electrical contact EC.

When the outside air has high humidity, entering of the outside air into the electrical contact EC results in condensation, and thus causes a possibility of corrosion (galvanic corrosion). However, as described above, providing the oil seal portions on both sides of the electrical contacts EC prevents the outside air from entering into the electrical contacts EC, and can thereby suppress corrosion (galvanic corrosion).

Further, because of the double provision of the oil seal portions, when a peeled portion occurs, the refrigerant can be reliably prevented from seeping to the outside through the peeled portion.

The corrosion prevention portion may further include the plating 37 described in the third embodiment. Thereby, the corrosion (galvanic corrosion) is more suppressed.

### <<Fifth Embodiment>>

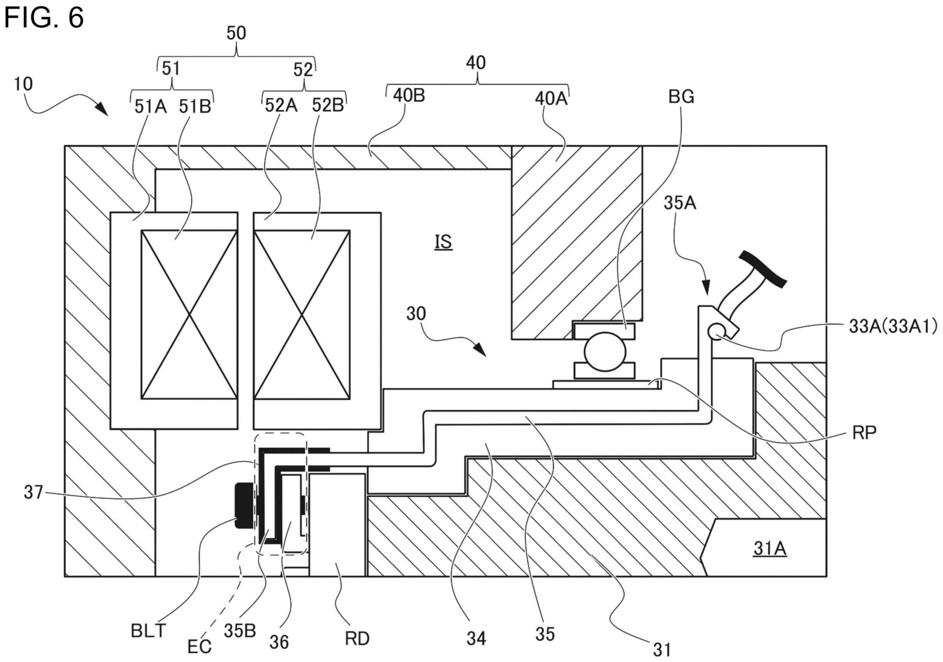

Next, the wound-field motor 10 according to a fifth embodiment of this disclosure is described with reference to FIG. 6.

In the foregoing embodiments, the brush-equipped motor 10 is described in which electric power is supplied to the rotor 30 via the electrode brushes. However, in the fifth embodiment, description is made on the motor 10 in which electric power is contactlessly supplied to the rotor 30.

However, a configuration of each part of the motor 10 according to the fifth embodiment is similar to that of the motor 10 according to the first embodiment. Accordingly, the similar configurations are denoted by the same reference numerals as those in the first embodiment, and the following mainly describes the matters different from those in the first embodiment and omits the description of the similar matters in some cases.

FIG. 6 is a partial sectional view taken along the rotor shaft 31 of the motor 10 according to the fifth embodiment of this disclosure, and corresponds to FIG. 2.

As illustrated in FIG. 6, the motor 10 according to the fifth embodiment includes an electric power supply mechanism 50 (what is called a rotary transformer) that contactlessly supplies electric power to the rotor 30.

The rotor 30 includes a rectifier diode RD with an electrode for electrical connection. The electrode of the rectifier diode RD is generally made of copper.

As described below, the copper electrode of this rectifier diode RD corresponds to the metal portion 36 made of a material different from aluminum.

The motor 10 according to the fifth embodiment also includes the casing 40 that accommodates the stator 20 and the rotor 30. However, the casing 40 includes a casing body 40A and a cover 40B. The cover 40B is attached to the casing body 40A, and prevents the refrigerant and the like from leaking to an outside. The cover 40B also forms a space that accommodates a part of the rotor 30.

In the fifth embodiment, the airtightness is secured by the cover 40B, and thus, the seal member O1, the seal member O2, and the seal member O3 in the first embodiment are not provided.

For this reason, a space inside the casing body 40A and a space inside the cover 40B constitute the wet space IS inside the casing 40. The wet space IS becomes wet due to the refrigerant (e.g., oil such as ATF).

As illustrated in FIG. 6, the electric power supply mechanism 50 includes an electric power transmitter 51 and an electric power receiver 52. The electric power transmitter 51 is provided at the cover 40B and connected to an external electric power source. The electric power receiver 52 is provided at the rotor 30, and rotates together with the rotor 30.

In the fifth embodiment, the electric power transmitter 51 is provided at the cover 40B. However, depending on a structure of the motor 10, the electric power transmitter 51 may be provided at the casing body 40A.

The electric power transmitter 51 includes an electric power transmission core 51A and an electric power transmission coil 51B. The electric power transmission core 51 includes a recess that opens on the one side (the right side in FIG. 6). The electric power transmission coil 51B is provided in the recess of the electric power transmission core 51A.

The electric power transmission coil 51B may be a coil wire wound in the recess, or may be, for example, a coil-shaped electrically conductive pattern formed on a substrate.

The electric power receiver 52 includes an electric power reception core 52A and an electric power reception coil 52B. The electric power reception core 52A includes a recess that opens on the opposite side (the left side in FIG. 6). The electric power reception coil 52B is provided in the recess of the electric power reception core 52A.

Similarly to the electric power transmission coil 51B, the electric power reception coil 52B may also be a coil wire wound in the recess, or may be, for example, a coil-shaped electrically conductive pattern formed on a substrate.

When alternating current is supplied to the electric power transmitter 51 from the external electric power source, alternating current is generated in the electric power receiver 52, and the rectifier diode RD converts this alternating current into direct current.

Thus, the rectifier diode RD is connected to the electric power receiver 52 contactlessly receiving the electric power, although the connection is not visible in the drawing.

Specifically, an end portion of the electric power reception coil 52B is connected to the rectifier diode RD.

The direct current converted by the rectifier diode RD is supplied to the aluminum rotor coil 33 via the aluminum terminal electrode 35.

As illustrated in FIG. 6, the rectifier diode RD itself is located in the space IS that is the wet space inside the casing 40. Thus, the copper electrode of the rectifier diode RD is also located in the wet space.

However, the copper wire coated with insulation is used as the electric power reception coil 52B. Accordingly, an electrical contact between the end portion of the electric power reception coil 52B and the rectifier diode RD is a contact between the same kinds of metal. Thus, the corrosion (galvanic corrosion) can be suppressed.

Meanwhile, similarly to the first embodiment, the terminal electrode 35 is made of aluminum, and thus, an electrical contact EC between the copper electrode (metal portion 36) of the rectifier diode RD and the terminal electrode 35 is an electrical contact EC that electrically connects the aluminum terminal electrode 35 to the metal portion made of the material (copper) different from aluminum.

In the fifth embodiment, the copper electrode (metal portion 36) of the rectifier diode RD and the terminal electrode 35 are fastened together by a bolt BLT. Thereby, the electrode (metal portion 36) and the terminal electrode 35 contact with each other at the electrical contact EC.

As described above, the rotor 30 in the fifth embodiment also includes the metal portion 36 made of the material different from aluminum, and the electrical contact EC electrically connecting the terminal electrode 35 to the metal portion 36. For this reason, the rotor 30 further includes a corrosion prevention portion that prevents corrosion at the electrical contact EC.

Specifically, in the fifth embodiment, similarly to the third embodiment, the corrosion prevention portion includes the plating 37 applied to a portion included in the terminal electrode 35 and associated with the electrical contact EC.

The corrosion prevention portion may include only the plating 37, or may further include molded resin or the like.

Thus, in the fifth embodiment, although the copper electrode of the rectifier diode RD is the metal portion 36 made of the material different from aluminum and is located in the wet space, the plating 37 is provided and serves as the corrosion prevention portion preventing the corrosion of the electrical contact EC. For this reason, the corrosion (galvanic corrosion) can be suppressed.

Meanwhile, in the fifth embodiment, the seal member O1, the seal member O2, and the seal member O3 in the first embodiment may be provided, and the rectifier diode RD may be thereby located in the space free of the refrigerant.

In this case, the electrical contact EC is also located in the space free of the refrigerant. Even in this case, the electrical contact EC is provided with the plating 37 serving as the corrosion prevention portion. For this reason, the corrosion (galvanic corrosion) potentially caused by the condensation can be suppressed, and oxidative degradation of the contact surface of the aluminum terminal electrode 35 in the electrical contact EC can be prevented.

The above description is made based on the specific embodiments, but this disclosure is not limited to the above-described embodiments.

In the above-described embodiments, the space in which the refrigerant exists is exemplified as a wet space. However, the wet space may be any space prone to cause the corrosion (galvanic corrosion).

Thus, the technical scope of this disclosure encompasses modifications and improvements to the embodiments. This is apparent for those skilled in the art from the description of claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A motor (10) including a stator (20) and a wound-field rotor (30), wherein
the rotor (30) includes:
a rotor core (32);
a rotor coil (33) made of aluminum and wound around the rotor core (32);
a terminal electrode (35) made of aluminum and provided at an end portion (33A) of the rotor coil (33); and
a rotor shaft (31) being attached to the rotor core (32) and rotating together with the rotor core (32), and
the terminal electrode (35) made of aluminum is attached to the rotor shaft (31), and is configured to receive electric power from an electrode connected to an external electric power source.

2. The motor (10) according to Claim 1, wherein
the rotor (30) includes:
a metal portion (36) made of a material being different from aluminum forming the electrode connected to the external electric power source;
an electrical contact (EC) electrically connecting the terminal electrode (35) to one side in the metal portion (36); and
a corrosion prevention portion preventing corrosion at the electrical contact (EC).

3. The motor (10) according to Claim 2, wherein
the end portion (33A) of the rotor coil (33) is located in a wet space, and
another side in the metal portion (36) is located in a dry space.

4. The motor (10) according to Claim 2 or 3, wherein
the corrosion prevention portion includes a resin molded portion (34) that encloses the electrical contact (EC).

5. The motor (10) according to Claim 4, wherein
the corrosion prevention portion includes an oil seal portion (38) that is located within the resin molded portion (34), and is provided on the terminal electrode (35) on a side of the rotor coil (33) with respect to the electrical contact (EC).

6. The motor (10) according to Claim 4 or 5, wherein
the metal portion (36) is a busbar being made of copper and connecting the terminal electrode (35) to an electrode brush that is outside the resin molded portion (34) and provided for supplying electric power to the rotor (30), and
the metal portion (36) includes an end on another side, the end contacting with the electrode brush and being ring-shaped along a rotational direction of the rotor (30).

7. The motor (10) according to any one of Claims 2 to 6, wherein
the corrosion prevention portion includes plating (37) applied to a portion included in the terminal electrode (35) and associated with the electrical contact (EC).

8. The motor (10) according to Claim 2, wherein
the metal portion (36) is an electrode of a rectifier diode (RD) connected to an electric power receiver that contactlessly receives electric power, the electrode being made of copper, and
the corrosion prevention portion includes plating (37) applied to a portion included in the terminal electrode (35) and associated with the electrical contact (EC).
